# EUROPEAN PATENT SPECIFICATION

(11) **EP 3 603 270 B1**
(45) Date of publication and mention of the grant of the patent: **15.05.2024**
(21) Application number: 18772102.2
(22) Date of filing: 23.03.2018
(51) Int. Cl.: H04W 72/04, H04W 72/12, H04W 74/08

(54) **OPPORTUNISTIC AND INTERFERENCE AWARE USAGE OF TDD BAND**
OPPORTUNISTISCHE UND INTERFERENZBEWUSSTE VERWENDUNG VON TDD-BAND
UTILISATION OPPORTUNISTE ET SENSIBLE AUX INTERFÉRENCES D'UNE BANDE TDD

(30) Priority: 23.03.2017 US 201762475481 P
(43) Date of publication of application: 05.02.2020
(73) Proprietor: Nokia Technologies Oy, 02610 Espoo (FI)
(72) Inventor: TIIROLA, Esa, 90450 Kempele (FI); HOOLI, Kari, 90540 Oulu (FI); PAJUKOSKI, Kari, 90240 Oulu (FI)
(74) Representative: Nokia EPO representatives
(86) International application number: PCT/FI2018/050221
(87) International publication number: WO 2018/172620

(56) References cited:
- WO-A1-2016/122784
- WO-A1-2016/122784
- WO-A1-2017/031471
- WO-A1-2017/031471
- US-A1- 2015 327 257
- US-A1- 2016 020 891
- US-A1- 2016 020 891
- US-A1- 2016 020 893
- US-A1- 2016 143 014
- US-A1- 2016 278 049
- US-A1- 2016 278 049
- US-A1- 2017 019 909
- US-A1- 2017 019 909
- SAMSUNG: "Cross-link interference management based on UE measurements", 3GPP DRAFT; R1-1703007 DYNAMIC_TDD, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE , vol. RAN WG1, no. Athens, Greece; 20170213 - 20170217 12 February 2017 (2017-02-12), XP051210148, Retrieved from the Internet: URL:http://www.3gpp.org/ftp/Meetings_3GPP_ SYNC/RAN1/Docs/ [retrieved on 2017-02-12]
- CATT: "Dynamic TDD slot structure", 3GPP DRAFT; R1-1702112, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE , vol. RAN WG1, no. Athens, Greece; 20170213 - 20170217 12 February 2017 (2017-02-12), XP051209273, Retrieved from the Internet: URL:http://www.3gpp.org/ftp/Meetings_3GPP_ SYNC/RAN1/Docs/ [retrieved on 2017-02-12]
- ZTE: "On Resource Assignment and Interference Handling for Flexible TDD", 3GPP DRAFT; R1-1609716 - DISCUSSSION ON RESOURCE ASSIGNMENT AND INTERFERENCE HANDLING FOR FLEXIBLE TDD, 3RD GENERATION PARTNERSHIP PROJECT (3GPP), MOBILE COMPETENCE CENTRE ; 650, ROUTE DES LUCIOLES ; , vol. RAN WG1, no. Lisbon, Portugal; 20161010 - 20161014 9 October 2016 (2016-10-09), XP051149750, Retrieved from the Internet: URL:http://www.3gpp.org/ftp/Meetings_3GPP_ SYNC/RAN1/Docs/ [retrieved on 2016-10-09]
- MEDIATEK INC: "Interference management in NR", 3GPP DRAFT; R1-1702719 INTERFERENCE MANAGEMENT IN NR CLEAN FINAL, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANC , vol. RAN WG1, no. Athens, Greece; 20170213 - 20170217 7 February 2017 (2017-02-07), pages 1-22, XP051221559, Retrieved from the Internet: URL:http://www.3gpp.org/ftp/tsg_ran/WG1_RL 1/TSGR1_88/Docs/ [retrieved on 2017-02-07]

## Description

### TECHNICAL FIELD

This invention relates generally to interference management in TDD networks utilizing flexible TDD and, in particular, to 3GPP New Radio (NR) physical layer design.

### BACKGROUND

This section is intended to provide a background or context to the invention disclosed below. The description herein may include concepts that could be pursued, but are not necessarily ones that have been previously conceived, implemented or described. Therefore, unless otherwise explicitly indicated herein, what is described in this section is not prior art to the description in this application and is not admitted to be prior art by inclusion in this section.

TR 36.802, Section 5.3, describes NR frame structure design. In broad terms, in NR frame structure design, both slot and mini-slot have been agreed to be supported. The duration of a slot is either 7 or 14 symbols depending on the subcarrier spacing of the used numerology. Furthermore slot aggregation is supported. The possible durations of a mini-slot should at least include 1 and 2 OFDM symbols.

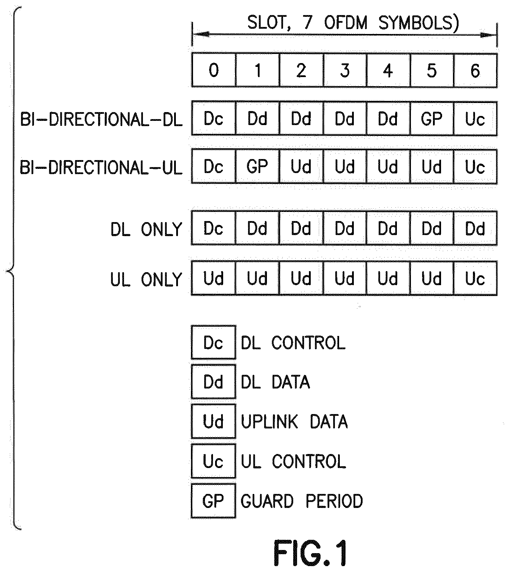

There can be three slot types, as shown in FIG. 1, that provide the basic support for both TDD and FDD. For bi-directional slots, there is either downlink data or uplink data transmission in each slot, as well as the corresponding downlink and uplink control. Bi-directional slots facilitate many crucial TDD functionalities in the NR frame structure, such as
- Link direction switching between DL and UL,
- Fully flexible traffic adaptation between DL and UL, and
- Opportunity for low latency, provided that slot length is selected to be short enough.

In all slots, multiplexing between DL control, DL/UL data, GP and UL control is based primarily on time division multiplexing allowing fast energy efficient pipeline processing of control and data in the receiver. Physical Downlink Control Channel (PDCCH) is conveyed in the DL control symbol(s) located at the beginning of the slot (or the mini-slot). However, the option of PDCCH and PDSCH multiplexing in frequency domain is not excluded. Additionally, frequency domain multiplexing of long PUCCH and PUSCH as well as short PUCCH (i.e. TDM'ed UL control part at the end of slot) and PUSCH is supported.

In addition to bi-directional slots, there are also DL-only slot and UL-only slot, also shown in FIG 1, which are needed at least in FDD mode, but also in certain TDD scenarios, to allow longer transmission periods in same direction. US 2017/0019909 discloses a solution for adaptive control of contention window in licensed assisted access. WO2016122784 discloses UL scheduling for license assisted access. WO2017031471 discloses re-contention-based co-existence on a shared communication medium, US2016278049 discloses scheduling UE UL transmissions on an unlicensed carrier, and US2016020891 discloses solution for TDD communications. Another example can be found in non patent document MEDIATEK INC: "Interference management in NR",3GPP DRAFT; R1-1702719 INTERFERENCE MANAGEMENT IN NR.

Acronyms or abbreviations that may be found in the specification and/or the drawing figures are defined within the context of this disclosure or as follows below:
- 3GPP: Third Generation Partnership Project
- CQI: Channel Quality Indicator
- CSI: Channel State Information
- CSS: Common Search Space
- D2D: Device to Device
- DCI: Downlink Control Information
- DFT-S-OFDM: Discrete Fourier Transform Spread OFDM
- DL: Downlink
- DMRS: Demodulation Reference Signal
- DTX: Discontinuous Transmission
- eIMTA: enhanced Interference Management and Traffic Adaptation
- eMBB: enhanced Mobile Broadband
- eNB or eNodeB: base station, evolved Node B
- EPDCCH: Enhanced Physical Downlink Control Channel
- FDD: Frequency Division Duplexing
- FDM: Frequency Division Multiplexing
- gNB: NR/5G Node B
- GP: Guard Period
- GW: Gateway
- LAA: License Assisted Access
- LBT: Listen Before Talk
- LTE: Long Term Evolution
- LTE-A: Long Term Evolution - Advanced
- MIMO: Multiple In, Multiple Out
- MME: Mobility Management Entity
- NCE: Network Control Entity
- NR: New Radio
- NZP: Non-Zero Power
- OFDM: Orthogonal Frequency Division Multiplexing
- O&M: Operations & Maintenance
- PDCCH: Physical Downlink Control Channel
- PDSCH: Physical Downlink Shared Channel
- PMI: Precoding Matrix Indicator
- PRACH: Physical Random Channel
- PRB: Physical Resource Block
- PUCCH: Physical Uplink Control Channel
- PUSCH: Physical Uplink Shared Channel
- Rel: Release
- RE: Resource Element
- RI: Rank Indicator
- RS: reference signal
- RRC: radio resource control
- Rx: Receive
- SGW: serving gateway
- SNR: signal-to-noise ratio
- TDD: Time Division Duplexing
- TDM: Time Division Multiplexing
- TS: technical specification
- Tx: Transmit
- UCI: Uplink Control Information
- UE: User Equipment
- UL: Uplink
- V2X: Vehicle to everything

The current invention moves beyond the current techniques and/or materials.

### BRIEF SUMMARY

The invention is defined by the appended independent claims and further embodiments are described by the dependent claims.

### BRIEF DESCRIPTION OF THE DRAWINGS

In the attached Drawing Figures:
FIG. 1 illustrates slot types in NR;
FIG. 2 depicts exemplary interference scenarios;
FIG. 3 illustrates an LTE Radio frame showing subframes according to an exemplary configuration;
FIG. 4 illustrates example of slot types;
FIG. 5 illustrates examples of LBT and GP location;
FIG. 6 illustrates exemplary scenario if wideband LBT performed from the control channel fails;
FIGs. 7A, 7B, and 7C, illustrate the avoidance of cross-link interference at UE per the current invention
FIG. 8 is a block diagram representation of a claimed embodiment taught by the current invention.
FIG. 9 is a block diagram of an exemplary system in which the exemplary embodiments may be practiced; and
FIG. 10 illustrates yet another exemplary use of edge cloud or distributed system.

### DETAILED DESCRIPTION OF THE DRAWINGS

This invention is related to 3GPP New Radio (NR) physical layer design and related 3GPP study item (RP-160671) as well as to specifying NR physical layer looking by to identify and develop technology components needed for NR systems being able to use any spectrum band ranging at least up to 100 GHz. Applicable usage scenarios, requirements and deployment scenarios defined in 3GPP TR 38.913 and a study item SI outcome is captured in 3GPP TR38.802. Rel-14 NR study item has been closed and a new Rel-15 work item (WI) dealing with New Radio Access Technology RP-170847 has been approved. The WI shall specify the NR functionalities for enhanced mobile broadband (eMBB) and ultra-reliable low-latency-communication (URLLC) as defined in TR 38.913. The NR under this work item should consider frequency ranges up to 52.6 GHz.

The performance of modern wireless networks is often limited by the interference between multiple communication links, including cross-link interference from adjacent cells, D2D / V2X side-links, backhauling links, etc. Interference distorts the desired signal and reduces the probability of successful reception. This problem may be reduced via utilization of interference mitigation techniques.

This invention improves upon existing cross-link interference, namely UL→DL interference which is created by UL transmitter in the close proximity of the UE receiving DL signal in the neighboring cell. This invention relates to interference management in TDD networks utilizing flexible TDD.

With flexible TDD, UL and DL (time) portions on neighboring cells are not aligned, but rather are cell-specifically and dynamically adjusted depending on the instantaneous amount of DL traffic and UL traffic on the cell as well as on the radio link conditions between gNB and active UEs. Dynamic adjustment of UL and DL (time) portions allows sharing the resources of a TDD cell per the traffic that is currently served in the cell. This can provide significant gains especially in small cells where only few UEs are served at a time and traffic may be mostly UL in one moment, and then mostly DL in another moment. A significant drawback of flexible TDD is that it creates cross-link (DL-to-UL and UL-to-DL) interference between neighboring cells.

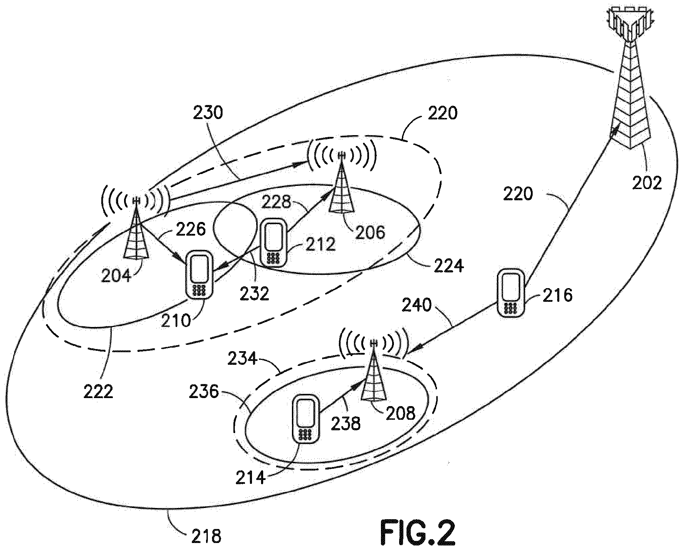

FIG. 2 depicts exemplary interference scenarios considered herein which may take place, for instance, in NR flexible TDD scenario.

In FIG. 2, a macro base station 202 has a coverage area denoted inside oval 218. Inside that coverage area are pico stations 204, 206, and 208, with coverage zones outlined by ovals 222, 224, and 236, respectively, and UEs 210, 212, 214, and 216. As a non-limiting example, pico stations 204 and 206 may be inside a structure encompassed within zone 220 and pico station 214 may be inside a structure encompassed within zone 234.

UE 212 maintains communication with pico station 206 via wireless link 226. UE 210 maintains communication with pico station 204 via wireless link 228. UE 210 maintains communication with pico station 208 via wireless link 238. UE 216 maintains communication with macro station 202 via wireless link 220.

As discussed herein, an example of co-channel interference 240 in uplink to uplink is shown between UE 216 and pico station 208, an example of cross-link interference 232 uplink to downlink is shown between UE 212 and UE 210, and an example of cross-link interference downlink to uplink 230 is shown between pico station 2014 and pico station 206.

Interference limited scenarios require specific consideration especially in TDD. With this invention, we provide a new solution to a classical problem. We consider flexible resource usage in TDD networks in a way that:
- Resource or frequency reuse 1 can be achieved for both DL and UL data (covering the scenario of co-channel interference with the same link direction); and/or
- Cross-link interference at UE end can be fully controlled by gNB.
Furthermore, we consider such a solution where coordination between cells can be kept at low level, without requiring fast and possibly high capacity backhaul links between cells.

One reference scenario for cross-link interference mitigation relates to LTE Rel-12 Work Item eIMTA - "Further Enhancements to LTE TDD for DL-UL Interference Management and Traffic Adaptation".

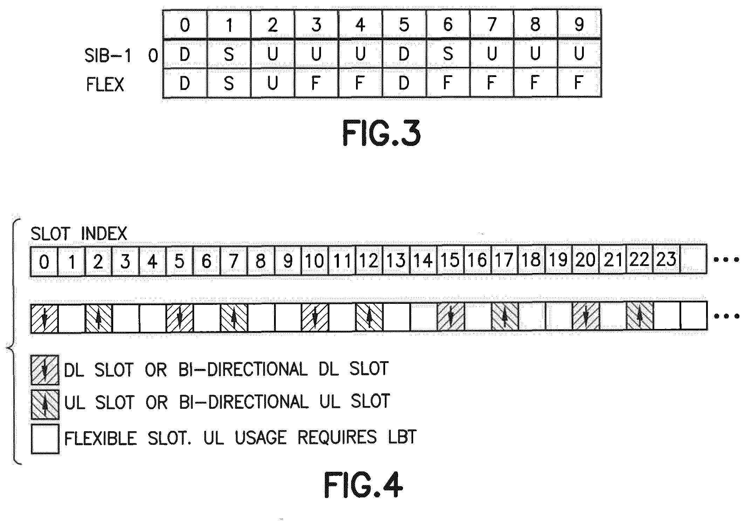

FIG. 3 illustrates the basic eIMTA setting with an LTE Radio frame showing Downlink (D), Uplink (U) and Special (S) subframes according to exemplary configuration broadcasted in the cell using system information block #1 (SIB-1) configuration #0, as well as Flexible subframes available for Rel-12 UEs configured to flexible UL/DL mode.

Here the TDD configuration is shown as 0 for example, but the same principle applies to other configurations as well. In addition to the SIB-1 configured UL-DL configuration, which defines whether a given subframe in the radio frame is downlink, special, or uplink subframe, in the case of flexible TDD UL-DL configurations some of the uplink and special subframes can be dynamically changed into downlink subframes. They are illustrated as "F" in FIG. 3.

So called cell clustering is the primary way to control cross-link interference in LTE eIMTA scenario. In that method, cells are grouped to cell clusters. For example, cells having most significant cross-link interference may be grouped into a same cluster. Cells part of the same cluster utilize the same TDD UL-DL configuration, whereas cells part of different clusters may utilize different TDD UL-DL configurations. Cell clustering involves excessive coordination between cells (increasing also latency in traffic adaptation) and limits, together with cross-link interference, the gain provided by the flexible TDD operation. Therefore it is not a sufficient solution for the considered scenario.

Listen before talk (LBT) procedure is a well-known solution for interference coordination on unlicensed band. LBT procedure is considered as the baseline mode of operation for unlicensed band. In a typical scenario (WiFi, LAA, Multefire), LBT procedure is applied in predefined manner basically for all signals. LBT procedure is defined to meet the co-existence requirements defined by regulator as well as to achieve fair co-existence among the nodes competing for channel access. In NR study item 3GPP TR 38.802 V1.3.0 (2017-02), LBT-like schemes are identified to be further studied aiming to mitigate cross-link interference with and without the assumption on inter-cell coordination. In the current invention we consider certain type of LBT for licensed band operation, as a way to coordinate flexible TDD to avoid excessive cross-link interference.

A non-limiting exemplary scenario, which although applies to a solution below from a slot based operation point of view is equally applicable also to mini-slot based operation, includes a Synchronized TDD network, a Licensed band operation, and focuses on opportunistic/interference aware usage of TDD band for UL data (and control). Shared spectrum, such as 3.5 GHz bad in the United States, could also thought of regarding licensed spectrum.

FIG. 4 depicts examples of slot types, and the details of slots A, B and C can be seen in FIG. 1, where DL slots (DL only and bi-directional DL) correspond to slot type A. UL slots (UL only and bi-directional) correspond to slot type B. All slot types can be used as slot type C.

A non-limiting exemplary embodiment has slot usage in a certain geographical area which is coordinated between cells. This can be done, for instance, using X2 signaling or O&M.

Predefined slots (slot type A) always operate in DL mode and are outside the opportunistic/interference aware UL usage. A gNB may allocate DL only or Bi-directional DL slots for these time instants. Slot type A provides opportunities for robust DL operation without risk of cross link interference (e.g. due to hidden node problem related to certain LBT schemes).

Predefined UL slots (slot type B) always operate in UL mode, and are outside the opportunistic/interference aware UL usage mode. A gNB may allocate UL only or Bi-directional UL slots for these time instants. UL operation during slot type B does not involve channel sensing (LBT). These slots can be configured in semi-static manner or indicated dynamically using UE dedicated/UE common DCI. A motivation behind these could be to provide robust UL resources without LBT blocking or cross-link interference. For example, certain control channels, such as PRACH or long PUCCH, may be transmitted via these slots. Allocation principles for slot type A and B are known and include various options, for instance, higher layer configuration, dynamic signaling, etc. In the case of dynamic signaling, the UE may determine the slot type by means of PDCCH blind detection from DL control channel.

Predefined slots (slot type C) operate either in DL or UL mode. DL mode does not require channel sensing or LBT. To operate in UL mode, a UE is required to perform channel sensing or LBT. Channel sensing and LBT operate as discussed herein below, but in short, LBT corresponds to energy and/or signal detection. There is a predefined threshold. The outcome of energy/signal detection is compared to the predefined threshold. If it is below the threshold, then LBT passes (i.e. channel is considered to be unoccupied) and if it is above the threshold, then LBT fails (i.e. channel is considered to be occupied). A UE performs (preferably one-shot LBT) the LBT before a UL transmission.

Regarding one-shot LBT, it can be thought of where LBT is done only once for certain transmission action of one predefined PUSCH length. In typical LBT operation in unlicensed band, LBT can be done multiple times for a single transmission (e.g. in the case of exponential backoff).

For the situation where LBT fails, if the neighboring or near-by cell is in DL mode, then no UL transmission can be made (or transmission with reduced transmission power).

For an LBT failure, the gNB needs to determine that LBT has failed. This determination can be made based on DTX detection or by explicit signaling transmitted by UE (e.g. using PUCCH on a slot of type B). Note that DTX detection can be based on energy detection (PUSCH data and/or PUSCH DMRS), while an alternative is to decode PUSCH such that the gNB can note that CRC is negative allowing it to then use the hypothesis that LBT has failed (when CRC is negative there are two options: 1) UE transmitted PUSCH but it was received with errors and 2) UE did not transmit PUSCH due to either errors in DL control channel reception at UE or UL LBT failed), and then can reschedule PUSCH.

After that failure determination, the gNB can request/schedule (re)transmission. Alternatively, another option is to allow LBT-based retransmission autonomously in the predefined slot(s). For example, when the first transmission attempt was made in slot n, and if UE detects common PDCCH indicating that slot type C is available in slot (n+k), it may try to retransmit PUSCH there (provided that k belongs to set of allowed values).

For the situation where LBT has succeeded, if the neighboring or near-by cell in UL mode (or DTX), then a UL transmission can take place. Note that in order to support reuse 1 during slot type C, LBT is made in a synchronous manner in all the cells (which is fulfilled when assuming that network is synchronous and assuming that UL UEs are performing LBT at the beginning of the slot).

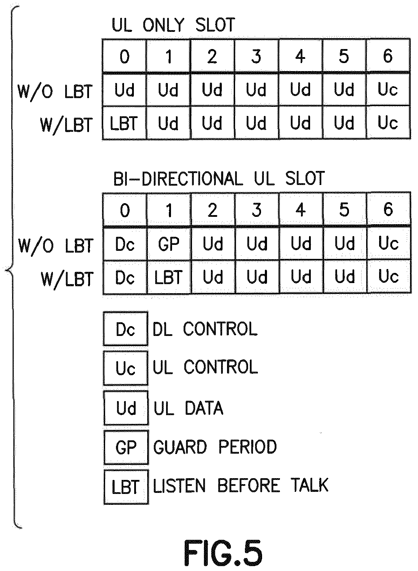

FIG. 5 illustrates examples of LBT and GP location. For LBT defined for flexible TDD on licensed band, the starting point is to maximize commonality with LBT defined for NR unlicensed band, which may include, for instance, the RX/TX switching functionality (except actual parameter values) and energy detection principle at the UE end. However, the LBT rules related to fairness can be relaxed considerably. For example, there is no need for random duration of channel sensing or exponential back-off after LBT collision. There can be also other differences such as the following:
- LBT may relate to a certain portion of the carrier (such as PUSCH bandwidth);
- UE may perform LBT multiple times within slot, for example, a first time during the DL control symbol(s) for the slot and another time during the DL data & GP for the slot;
- LBT position within slot depends on the slot format and the number of LBT attempts within slot. In the preferred scenario, UE knows the slot format when preparing the transmission; and/or
- UE may utilize different LBT threshold for different scenarios, e.g. depending on the LBT type (wideband, narrowband).

The bandwidth used in energy detection in LBT may depend on the scenario.

In a first example of an embodiment of the invention, LBT carried out during the DL control symbols may be always wideband (this is due to the fact that PDCCH and PDSCH location in frequency varies according to the gNB scheduling decision). For example, current systems operating on an unlicensed band use wideband LBT.

In a second example of an embodiment of the invention, the LBT is carried out on the scheduled band UL resources only. This may be feasible, for instance, in the case when LBT relates to DL/UL data channel or long PUCCH FDM'ed with PUSCH (and not DL control channels TDM'ed with PDSCH/PUSCH).

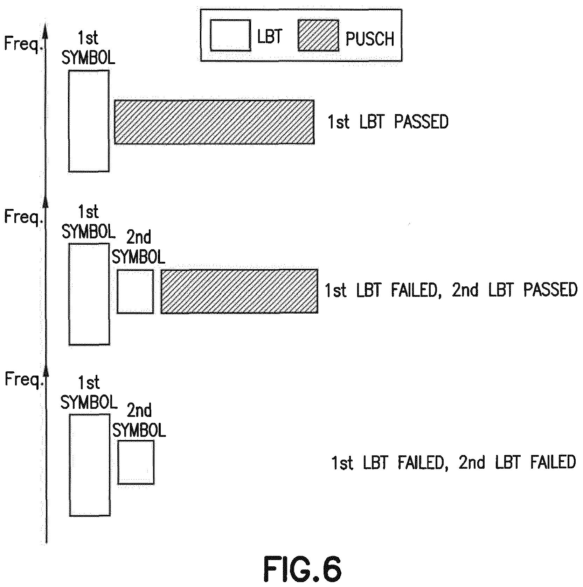

As can be seen from FIG. 6, if wideband LBT performed from the control channel fails, then the UE can make a narrowband LBT (for UL) in the next symbol of the slot or in the network configured symbol of the slot covering the DL data channel (from frequency resources covering only scheduled UL data). This means that transmission is allowed if scheduled UL resource is free from DL signal. It is also possible to have LBT bandwidth slightly wider than scheduled UL data bandwidth. This can be seen as way to provide some guard band for UL→DL interference at the UE. UE may also use lower Tx power after a narrowband LBT than after a wideband LBT. If there are multiple symbol starting positions available in UL (within slot type C), gNB can detect the correct Tx position either implicitly (based on DTX detection) or explicitly based on data-associated control signaling.

In a third example of an embodiment of the invention, LBT based on a predefined signal, such as PDCCH CSS DMRS in the neighboring cell(s), is feasible, for instance, in the case when LBT relates to DL control channel but the UE must know the PDCCH CSS DMRS in the neighboring cells.

In a fourth example of an embodiment of the invention, when LBT is based on a detected PDCCH from the neighboring cells, then UE must be aware about the all PDCCH parameters used in the neighboring cells. In an embodiment, UE is monitoring just common PDCCH from the neighboring cells.

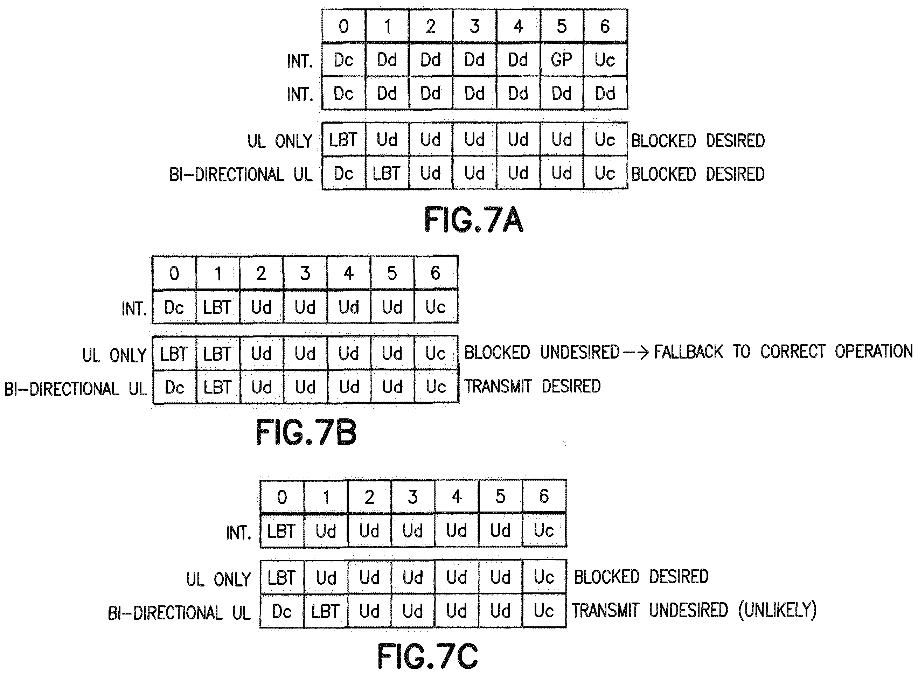

FIG. 7A, 7B, and 7C, illustrate the avoidance of cross-link interference at UE per the current invention. When the neighboring cell is in DL mode, the present invention teaches not transmit in present cell (such that LBT must block UL transmission). The LBT operation on slot type C is discussed in different examples of interference situations: scenarios, 1, 2, and 3.

As shown in FIG. 7A, in scenario 1, the interfering cell (Int.) utilizes DL only or Bi-directional DL slot formats. LBT performs correctly for both UL only and Bi-directional UL slots. In the UL only slot, the UE may utilize wideband LBT for the 1st symbol. An optional LBT is available in the case when the first LBT is failed, where the UE can perform a narrowband LBT for the 2nd symbol (then FDM between DL and UL). In Bi-directional UL slot, the LBT takes place on the second DL (control and/or data) symbol. If UE knows that the second symbol is data only, then it may perform a narrowband LBT. The (maximum) number of symbols used for control channels (or at least assumed in LBT) may be part of higher layer configuration.

As shown in FIG. 7B, in scenario 2, the interfering cell (Int.) utilizes Bi-directional UL slot. For the Bi-directional UL slot, the LBT performs correctly. However, for the UL only slot, the DL control part of the neighboring cell's UL transmission may block the UL data part of bi-directional UL slot. This can be seen as an undesired behavior (since a remaining part of the slot is in UL mode). However, the UE may also perform LBT for the 2nd symbol. This corresponds to the desired operation according to bi-directional UL slot.

As shown in FIG. 7C, in scenario 3, the interfering cell (Int.) utilizes only the UL slot format. For the UL only slot, the LBT performs correctly. Regarding the Bi-directional UL slot, the Neighboring cell's UL transmission may block the UL data part of bi-directional UL slot. This can be seen as an undesired behavior (since remaining part of the slot is in UL mode). However, this can be seen as a quite unlikely scenario, since it can be assumed that DL control part of bi-directional UL slot blocked the UL transmission during the first symbol (based on Scenario 2). Assuming that the interfering cell performs LBT also during the 2nd symbol, interfering cells will perform LBT synchronously (then the desired operation). On the other hand, performing LBT on the scheduled bandwidth can be seen as another way to solve the collision in this scenario.

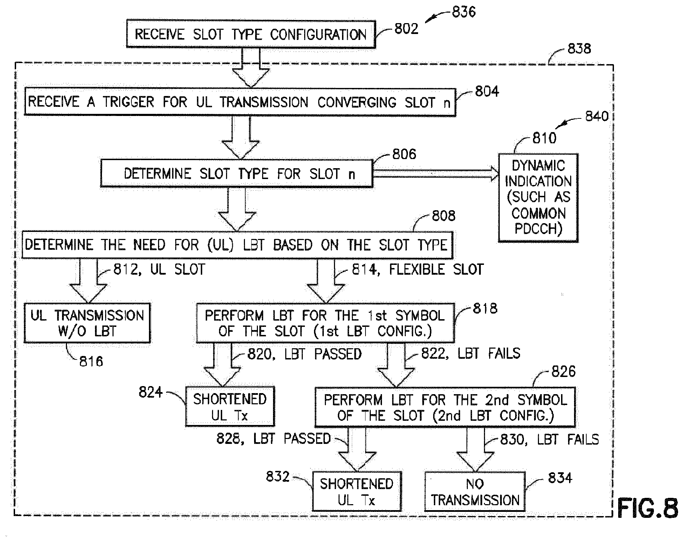

As can be seen from FIG. 8 which is a block diagram representation of a claimed embodiment taught by the current invention, during the configuration phase 836, a UE will receive slot type configuration at least for certain slots 802. This may be done by means of common/dedicated higher layer signaling. For example, periodical slots containing DL synchronization signals may be seen as DL only slots (slot type A). Similarly, periodical slots containing PRACH may be seen as UL only slots (slot type B). gNB may configure also some periodical UL slots (type B) for providing sufficient coverage for UL control channel (long PUCCH). During this phase, gNB may configure certain slots to operate according to slot type C. This configuration phase 836 can be seen a step where the proposed LBT-based UL functionality is switched on. Configuration phase 836 may involve also coordination between neighboring cells. This may be done e.g. by means of O&M signaling or via standardized X2 interface. Please note, too, that while FIG. 8 is written from slot based operation point of view, the representation is equally valid for mini-slot based operation. The remaining steps would be part of a dynamic operation (for each UL slot n) 838.

The UE will receive a trigger for UL transmission converging slot n in step 804. The slot type for slot n is determined 806, which may be optionally be done 840 as a dynamic indication (such as common PDCCH) 810. Other options (not shown) are to derive slot type from higher layer configuration or derive it from DCI such as DCI triggering the UL transmission). Next step 808 is that the need for (UL) LBT is determined based on the slot type. For a UL slot 812, the UL transmission is performed without LBT 818. For a flexible slot 814, LBT is performed for the 1st symbol of the slot (1^{st} LBT configuration) 818. If LBT passes 820, then the UL transmission is shortened 824. If the LBT fails 822, then LBT is performed for the 2^{nd} symbol of the slot (2^{nd} LBT configuration) 826. Then if after this 2^{nd} LBT configuration, LBT passes 828, then the UL transmission is shortened 832. However, if after this 2^{nd} LBT configuration, LBT fails 830, then no UL transmission is made 834.

Additionally, there could be also more than two LBT attempts per slot (although FIG. 8 shows just two attempts). In one embodiment, UE may perform LBT only for the 2^{nd} symbol of the slot using 2^{nd} LBT configuration. This approach could be considered e.g. for the scenario when transmitting long PUCCH via slot type B (→ there is just one allowed starting position defined for control channel).

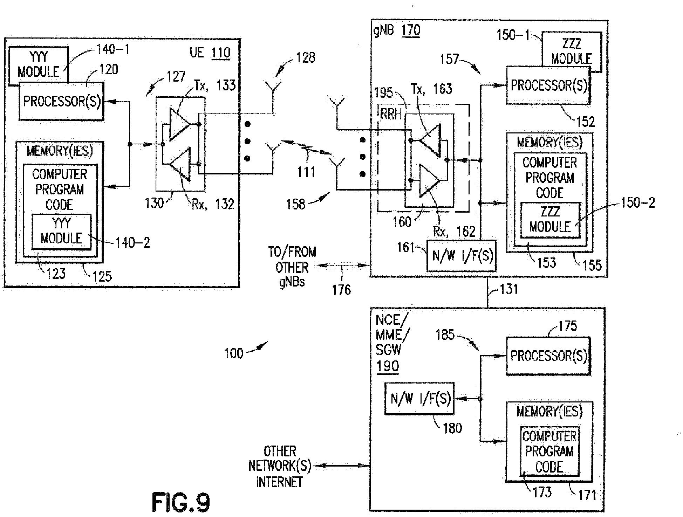

Turning to FIG. 9, this figure shows a block diagram of one possible and non-limiting exemplary system in which the exemplary embodiments may be practiced. In FIG. 9, a user equipment (UE) 110 is in wireless communication with a wireless network 100. A UE is a wireless, typically mobile device that can access a wireless network. The UE 110 includes one or more processors 120, one or more memories 125, and one or more transceivers 130 interconnected through one or more buses 127. Each of the one or more transceivers 130 includes a receiver, Rx, 132 and a transmitter, Tx, 133. The one or more buses 127 may be address, data, or control buses, and may include any interconnection mechanism, such as a series of lines on a motherboard or integrated circuit, fiber optics or other optical communication equipment, and the like. The one or more transceivers 130 are connected to one or more antennas 128. The one or more memories 125 include computer program code 123. The UE 110 includes a YYY module 140, comprising one of or both parts 140-1 and/or 140-2, which may be implemented in a number of ways. The YYY module 140 may be implemented in hardware as YYY module 140-1, such as being implemented as part of the one or more processors 120. The YYY module 140-1 may be implemented also as an integrated circuit or through other hardware such as a programmable gate array. In another example, the YYY module 140 may be implemented as YYY module 140-2, which is implemented as computer program code 123 and is executed by the one or more processors 120. For instance, the one or more memories 125 and the computer program code 123 may be configured to, with the one or more processors 120, cause the user equipment 110 to perform one or more of the operations as described herein. The UE 110 communicates with eNB 170 via a wireless link 111.

The gNB (NR/5G Node B but possibly an evolved NodeB) 170 is a base station (e.g., for LTE, long term evolution) that provides access by wireless devices such as the UE 110 to the wireless network 100. The gNB 170 includes one or more processors 152, one or more memories 155, one or more network interfaces (N/W I/F(s)) 161, and one or more transceivers 160 interconnected through one or more buses 157. Each of the one or more transceivers 160 includes a receiver, Rx, 162 and a transmitter, Tx, 163. The one or more transceivers 160 are connected to one or more antennas 158. The one or more memories 155 include computer program code 153. The gNB 170 includes a ZZZ module 150, comprising one of or both parts 150-1 and/or 150-2, which may be implemented in a number of ways. The ZZZ module 150 may be implemented in hardware as ZZZ module 150-1, such as being implemented as part of the one or more processors 152. The ZZZ module 150-1 may be implemented also as an integrated circuit or through other hardware such as a programmable gate array. In another example, the ZZZ module 150 may be implemented as ZZZ module 150-2, which is implemented as computer program code 153 and is executed by the one or more processors 152. For instance, the one or more memories 155 and the computer program code 153 are configured to, with the one or more processors 152, cause the gNB 170 to perform one or more of the operations as described herein. The one or more network interfaces 161 communicate over a network such as via the links 176 and 131. Two or more gNBs 170 communicate using, e.g., link 176. The link 176 may be wired or wireless or both and may implement, e.g., an X2 interface.

The one or more buses 157 may be address, data, or control buses, and may include any interconnection mechanism, such as a series of lines on a motherboard or integrated circuit, fiber optics or other optical communication equipment, wireless channels, and the like. For example, the one or more transceivers 160 may be implemented as a remote radio head (RRH) 195, with the other elements of the gNB 170 being physically in a different location from the RRH, and the one or more buses 157 could be implemented in part as fiber optic cable to connect the other elements of the gNB 170 to the RRH 195.

It is noted that description herein indicates that "cells" perform functions, but it should be clear that the gNB that forms the cell will perform the functions. The cell makes up part of a gNB. That is, there can be multiple cells per gNB.

The wireless network 100 may include a network control element (NCE) 190 that may include MME (Mobility Management Entity)/SGW (Serving Gateway) functionality, and which provides connectivity with a further network, such as a telephone network and/or a data communications network (e.g., the Internet). The gNB 170 is coupled via a link 131 to the NCE 190. The link 131 may be implemented as, e.g., an S1 interface. The NCE 190 includes one or more processors 175, one or more memories 171, and one or more network interfaces (N/W I/F(s)) 180, interconnected through one or more buses 185. The one or more memories 171 include computer program code 173. The one or more memories 171 and the computer program code 173 are configured to, with the one or more processors 175, cause the NCE 190 to perform one or more operations.

The wireless network 100 may implement network virtualization, which is the process of combining hardware and software network resources and network functionality into a single, software-based administrative entity, a virtual network. Network virtualization involves platform virtualization, often combined with resource virtualization. Network virtualization is categorized as either external, combining many networks, or parts of networks, into a virtual unit, or internal, providing network-like functionality to software containers on a single system. Note that the virtualized entities that result from the network virtualization are still implemented, at some level, using hardware such as processors 152 or 175 and memories 155 and 171, and also such virtualized entities create technical effects.

The computer readable memories 125, 155, and 171 may be of any type suitable to the local technical environment and may be implemented using any suitable data storage technology, such as semiconductor based memory devices, flash memory, magnetic memory devices and systems, optical memory devices and systems, fixed memory and removable memory. The computer readable memories 125, 155, and 171 may be means for performing storage functions. The processors 120, 152, and 175 may be of any type suitable to the local technical environment, and may include one or more of general purpose computers, special purpose computers, microprocessors, digital signal processors (DSPs) and processors based on a multi-core processor architecture, as non-limiting examples. The processors 120, 152, and 175 may be means for performing functions, such as controlling the UE 110, gNB 170, and other functions as described herein.

In general, the various embodiments of the user equipment 110 can include, but are not limited to, cellular telephones such as smart phones, tablets, personal digital assistants (PDAs) having wireless communication capabilities, portable computers having wireless communication capabilities, image capture devices such as digital cameras having wireless communication capabilities, gaming devices having wireless communication capabilities, music storage and playback appliances having wireless communication capabilities, Internet appliances permitting wireless Internet access and browsing, tablets with wireless communication capabilities, as well as portable units or terminals that incorporate combinations of such functions.

Embodiments herein may be implemented in software (executed by one or more processors), hardware (e.g., an application specific integrated circuit), or a combination of software and hardware. In an example of an embodiment, the software (e.g., application logic, an instruction set) is maintained on any one of various conventional computer-readable media. In the context of this document, a "computer-readable medium" may be any media or means that can contain, store, communicate, propagate or transport the instructions for use by or in connection with an instruction execution system, apparatus, or device, such as a computer, with one example of a computer described and depicted, e.g., in FIG. 9. A computer-readable medium may comprise a computer-readable storage medium or other device that may be any media or means that can contain or store the instructions for use by or in connection with an instruction execution system, apparatus, or device, such as a computer.

The current architecture in LTE networks is fully distributed in the radio and fully centralized in the core network. The low latency requires bringing the content close to the radio which leads to local break out and multi-access edge computing (MEC). 5G may use edge cloud and local cloud architecture. Edge computing covers a wide range of technologies such as wireless sensor networks, mobile data acquisition, mobile signature analysis, cooperative distributed peer-to-peer ad hoc networking and processing also classifiable as local cloud/fog computing and grid/mesh computing, dew computing, mobile edge computing, cloudlet, distributed data storage and retrieval, autonomic self-healing networks, remote cloud services and augmented reality. In radio communications, using edge cloud may mean node operations to be carried out, at least partly, in a server, host or node operationally coupled to a remote radio head or base station comprising radio parts. It is also possible that node operations will be distributed among a plurality of servers, nodes or hosts. It should also be understood that the distribution of labor between core network operations and base station operations may differ from that of the LTE or even be non-existent. Some other technology advancements probably to be used are Software-Defined Networking (SDN), Big Data, and all-IP, which may change the way networks are being constructed and managed.

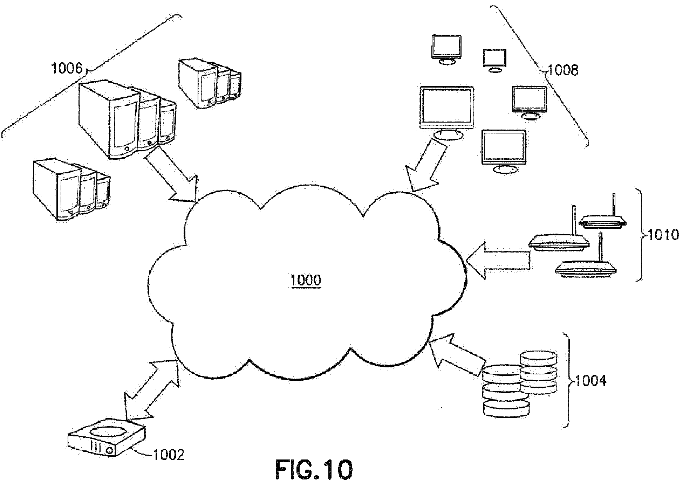

FIG. 10 depicts one possible manner to carry out embodiments described above of an edge cloud 1000 using a distributed computing system. An exemplary embodiment comprises a radio node 1002, connected to the server 1004. Exemplary embodiments implementing the system allow the edge cloud server 1004 and the radio node 1002 as stand-alone apparatuses communicating with each other and various other devices (shown as 1006, 1008, and 1010) via a radio path or via a wired connection or they may be located in a same entity communicating via a wired connection.

If desired, the different functions discussed herein may be performed in a different order and/or concurrently with each other. Furthermore, if desired, one or more of the above-described functions may be optional or may be combined.

Although various aspects are set out above, other aspects comprise other combinations of features from the described embodiments, and not solely the combinations described above. If desired, the different functions discussed herein may be performed in a different order and/or concurrently with each other. Furthermore, if desired, one or more of the above-described functions may be optional or may be combined.

Although various aspects of the invention are set out in the independent claims, other aspects of the invention comprise other combinations of features from the described embodiments and/or the dependent claims with the features of the independent claims, and not solely the combinations explicitly set out in the claims.

Without in any way limiting the scope, interpretation, or application of the claims appearing below, an advantage or technical effect of one or more of the exemplary embodiments disclosed herein presents flexible TDD where part of resources are determined to be flexible in terms of link direction such that the flexible resources can be used opportunistically for UL transmissions while protecting DL transmissions from excessive UL→DL interference. The current solution can be combined also with a separate solution protecting UL transmissions from excessive DL→UL transmissions.

Another advantage or technical effect of one or more of the exemplary embodiments disclosed herein is that the effect of the solution has inbuilt support for high capacity achieved by resource adaptation to the current traffic situation.

Another advantage or technical effect of one or more of the exemplary embodiments disclosed herein is that it provides robust DL and UL operation on "fixed" slot types A and B as well as robust DL operation on flexible slot type C under cross-link interference

Another advantage or technical effect of one or more of the exemplary embodiments disclosed herein is that it is distributed in the sense that it does not require excessive signaling between gNBs - signaling for determining slot types A, B, and C is sufficient.

Yet another advantage or technical effect of one or more of the exemplary embodiments disclosed herein are that he solution has inbuilt support for robust cell edge performance, as the invention avoids excessive UL→DL interference taking place on the same time/frequency -domain resource elements in the neighboring cells. However, it allows for UL→DL interference frequency division multiplexed with desired DL data signal.

## Claims

1. An apparatus comprising:
means (120, 125, 130) configured for receiving by a user equipment, UE, from a node in a wireless communications system, a trigger for uplink, UL, transmission;
means (120, 125, 130) configured for determining a slot type by the UE **characterized by**
means (120, 125, 130) configured for determining the need for UL listen before talk, LBT, -
based interference sensing on the determined slot type, means (120, 125, 130) configured for performing symbol wise LBT-based interference sensing in response to the determined slot type being a flexible slot for one or more first symbols of the slot,
performing a shortened UL transmission by the UE after a successful LBT-based interference sensing for a symbol, and
means (120, 125, 130) configured for transmitting by the UE without performing LBT-based interference sensing in response to the determined slot type being a UL slot.

2. The apparatus of claim 1, comprising means configured for performing a shortened UL transmission by the UE based on LBT-based interference sensing succeeding for a first symbol of the flexible slot.

3. The apparatus of claim 2, wherein the LBT-based interference sensing for the first symbol is based on a wideband measurement.

4. The apparatus of claim 1, wherein, based on LBT-based interference sensing failing for the first symbol of the flexible slot, performing LBT-based interference sensing for at least one of a second symbol or configured symbol of the flexible slot.

5. The apparatus of claim 4, wherein the LBT-based interference sensing for the at least one of a second symbol or configured symbol is based on at least one of wideband, narrow band, or configurable band measurement.

6. The apparatus of claim 4, comprising means configured for preventing the transmission by the UE based on LBT-based interference sensing failing for the second symbol or configured symbol of the flexible slot.

7. The apparatus of claim 4, comprising means configured for performing a shortened UL transmission by the UE based on the LBT-based interference sensing succeeding for the second symbol or configured symbol.

8. The apparatus of any of claims 1-7, comprising means configured for requesting UL by the UE from the node prior to receiving the trigger.

9. The apparatus of any of claims 1-8, comprising means configured for receiving by the UE a slot type configuration from the node prior to determining the slot type.

10. The apparatus of any of claims 1-9, wherein the LBT-based interference sensing comprises at least one of detecting energy on channel or detecting energy of a signal, and comparing the detection outcome against a threshold.

11. The apparatus of any of claims 1-10, wherein the slot type is determined from at least one of control information triggering UL transmission, determined implicitly from system information.

12. The apparatus of any of claims 1-11, comprising means configured for determining the need for UL LBT-based interference sensing on the determined slot type based on predetermined rules.

13. The apparatus of claim 1, wherein a network is synchronized, wherein UL slots in neighboring cells are operating in UL mode, and wherein flexible slots in neighboring cells are operating either in DL or UL mode.

14. A method comprising:
receiving (804) by a user equipment, UE, from a node in a wireless communications system, a trigger for uplink, UL, transmission;
determining (806) a slot type by the UE; **characterized by**
determining (808) the need for UL listen before talk, LBT, -based interference sensing on the determined slot type,
performing (818, 826) symbol wise LBT-based interference sensing in response to the determined slot type being a flexible slot for one or more first symbols of the slot;
performing a shortened UL transmission by the UE after a successful LBT-based interference sensing for a symbol and
transmitting (816) by the UE without performing LBT-based interference sensing in response to the determined slot type being a UL slot.

## Patentansprüche

1. Vorrichtung, die Folgendes umfasst:
Mittel (120, 125, 130), die zum Empfangen eines Auslösers für eine Uplink(UL)-Übertragung durch eine Teilnehmereinrichtung, UE, von einem Knoten in einem drahtlosen Kommunikationssystem ausgelegt sind;
Mittel (120, 125, 130), die zum Bestimmen einer Schlitzart durch die UE ausgelegt sind, **gekennzeichnet durch**
Mittel (120, 125, 130), die zum Bestimmen des Bedarfs einer Interferenzerfassung auf Basis von UL-Listen-before-Talk, LBT, an der bestimmten Schlitzart ausgelegt sind,
Mittel (120, 125, 130), die in Reaktion darauf, dass die bestimmte Schlitzart ein flexibler Schlitz für ein oder mehrere Symbole des Schlitzes ist, zum Durchführen einer symbolweisen LBT-basierten Interferenzerfassung ausgelegt sind,
Durchführen einer verkürzten UL-Übertragung durch die UE nach einer erfolgreichen LBT-basierten Interferenzerfassung für ein Symbol, und
Mittel (120, 125, 130), die zum Übertragen durch die UE ausgelegt sind, ohne in Reaktion darauf, dass die bestimmte Schlitzart ein UL-Schlitz ist, eine LBT-basierte Interferenzerfassung durchzuführen.

2. Vorrichtung nach Anspruch 1, die Mittel umfasst, die darauf basierend, dass eine LBT-basierte Interferenzerfassung für ein erstes Symbol des flexiblen Schlitzes erfolgreich ist, zum Durchführen einer verkürzten UL-Übertragung durch die UE ausgelegt sind.

3. Vorrichtung nach Anspruch 2, wobei die LBT-basierte Interferenzerfassung für das erste Symbol auf einer Breitbandmessung basiert.

4. Vorrichtung nach Anspruch 1, wobei, darauf basierend, dass eine LBT-basierte Interferenzerfassung für das erste Symbol des flexiblen Schlitzes fehlschlägt, Durchführen der LBT-basierten Interferenzerfassung für mindestens eines von einem zweiten Symbol oder einem ausgelegten Symbol des flexiblen Schlitzes.

5. Vorrichtung nach Anspruch 4, wobei die LBT-basierte Interferenzerfassung für das mindestens eine eines zweiten Symbols oder eines ausgelegten Symbols auf mindestens einem von einer Breitband-, einer Schmalband- oder einer Messung eines auslegbaren Bandes basiert.

6. Vorrichtung nach Anspruch 4, die Mittel umfasst, die darauf basierend, dass die LBT-basierte Interferenzerfassung für das zweite Symbol oder das ausgelegte Symbol des flexiblen Schlitzes fehlschlägt, dazu ausgelegt sind, die Übertragung durch die UE zu verhindern.

7. Vorrichtung nach Anspruch 4, die Mittel umfasst, die darauf basierend, dass die LBT-basierte Interferenzerfassung für das zweite Symbol oder das ausgelegte Symbol erfolgreich ist, zum Durchführen einer verkürzten UL-Übertragung durch die UE ausgelegt sind.

8. Vorrichtung nach einem der Ansprüche 1 bis 7, die Mittel umfasst, die zum Anfordern eines UL durch die UE beim Knoten vor Empfangen des Auslösers ausgelegt sind.

9. Vorrichtung nach einem der Ansprüche 1 bis 8, die Mittel umfasst, die zum Empfangen einer Schlitzartauslegung durch die UE vom Knoten vor Bestimmen der Schlitzart ausgelegt sind.

10. Vorrichtung nach einem der Ansprüche 1 bis 9, wobei die LBT-basierte Interferenzerfassung mindestens eines vom Detektieren von Energie auf einem Kanal oder Detektieren von Energie eines Signals sowie das Vergleichen des Detektionsergebnisses mit einem Schwellwert umfasst.

11. Vorrichtung nach einem der Ansprüche 1-10, wobei die Schlitzart anhand von mindestens einem von Steuerinformationen, die eine UL-Übertragung auslösen, oder implizit anhand von Systeminformationen bestimmt wird.

12. Vorrichtung nach einem der Ansprüche 1 bis 11, die Mittel umfasst, die zum Bestimmen des Bedarfs einer LBT-basierten UL-Interferenzerfassung an der bestimmten Schlitzart auf Basis von vorbestimmten Regeln ausgelegt sind.

13. Vorrichtung nach Anspruch 1, wobei ein Netzwerk synchronisiert wird, wobei UL-Schlitze in Nachbarzellen im UL-Modus betrieben werden und wobei flexible Schlitze in Nachbarzellen entweder im DL- oder im UL-Modus betrieben werden.

14. Verfahren, das Folgendes umfasst:
Empfangen (804) eines Auslösers für eine Uplink(UL)-Übertragung durch eine Teilnehmereinrichtung, UE, von einem Knoten in einem drahtlosen Kommunikationssystem;
Bestimmen (806) einer Schlitzart durch die UE; **gekennzeichnet durch**
Bestimmen (808) des Bedarfs der Interferenzerfassung auf Basis von UL-Listen-before-Talk, LBT, an der bestimmten Schlitzart,
Durchführen (818, 826) einer symbolweisen LBT-basierten Interferenzerfassung in Reaktion darauf, dass die bestimmte Schlitzart ein flexibler Schlitz für ein oder mehrere Symbole des Schlitzes ist;
Durchführen einer verkürzten UL-Übertragung durch die UE nach einer erfolgreichen LBT-basierten Interferenzerfassung für ein Symbol und
Übertragen (816) durch die UE, ohne in Reaktion darauf, dass die bestimmte Schlitzart ein UL-Schlitz ist, eine LBT-basierte Interferenzerfassung durchzuführen.

## Revendications

1. Appareil comprenant :
des moyens (120, 125, 130) configurés pour recevoir d'un noeud dans un système de communications sans fil, par un équipement utilisateur, UE, un déclenchement d'une transmission de liaison montante, UL ;
des moyens (120, 125, 130) configurés pour déterminer un type de créneau par l'UE, **caractérisé par**
des moyens (120, 125, 130) configurés pour déterminer la nécessité d'une détection d'interférence basée sur la technique écouter avant de parler, LBT, UL, sur le type de créneau déterminé,
des moyens (120, 125, 130) configurés pour réaliser une détection d'interférence basée sur LBT concernant les symboles, lorsque le type de créneau déterminé est un créneau flexible pour un ou plusieurs premiers symboles du créneau,
réaliser une transmission UL raccourcie par l'UE après une détection d'interférence basée sur LBT réussie pour un symbole, et
des moyens (120, 125, 130) configurés pour la transmission par l'UE sans réaliser de détection d'interférence basée sur LBT lorsque le type de créneau déterminé est un créneau UL.

2. Appareil selon la revendication 1, comprenant des moyens configurés pour réaliser une transmission UL raccourcie par l'UE lorsque la détection d'interférence basée sur LBT réussit pour un premier symbole du créneau flexible.

3. Appareil selon la revendication 2, dans lequel la détection d'interférence basée sur LBT pour le premier symbole est basée sur une mesure à large bande.

4. Appareil selon la revendication 1, dans lequel une détection d'interférence basée sur LBT pour au moins l'un parmi un deuxième symbole ou un symbole configuré du créneau flexible est réalisée lorsque la détection d'interférence basée sur LBT échoue pour le premier symbole du créneau flexible.

5. Appareil selon la revendication 4, dans lequel la détection d'interférence basée sur LBT pour le au moins un parmi un deuxième symbole ou un symbole configuré est basée sur au moins l'une parmi une mesure à large bande, à bande étroite ou à bande configurable.

6. Appareil selon la revendication 4, comprenant des moyens configurés pour empêcher la transmission par l'UE lorsque la détection d'interférence basée sur LBT échoue pour le deuxième symbole ou pour le symbole configuré du créneau flexible.

7. Appareil selon la revendication 4, comprenant des moyens configurés pour réaliser une transmission UL raccourcie par l'UE lorsque la détection d'interférence basée sur LBT réussit pour le deuxième symbole ou pour le symbole configuré.

8. Appareil selon l'une des revendications 1 à 7, comprenant des moyens configurés pour demander une UL par l'UE du noeud avant de recevoir le déclenchement.

9. Appareil selon l'une des revendications 1 à 8, comprenant des moyens configurés pour recevoir du noeud, par l'UE, une configuration de type de créneau avant de déterminer le type de créneau.

10. Appareil selon l'une des revendications 1 à 9, dans lequel la détection d'interférence basée sur LBT comprend au moins l'une parmi une détection de l'énergie sur le canal ou une détection de l'énergie d'un signal, et la comparaison du résultat de la détection avec un seuil.

11. Appareil selon l'une des revendications 1 à 10, dans lequel le type de créneau est déterminé à partir d'au moins l'un parmi des informations de contrôle déclenchant la transmission UL, ou déterminé implicitement à partir d'informations système.

12. Appareil selon l'une des revendications 1 à 11, comprenant des moyens configurés pour déterminer la nécessité d'une détection d'interférence basée sur LBT UL sur le type de créneau déterminé sur la base de règles prédéterminées.

13. Appareil selon la revendication 1, dans lequel un réseau est synchronisé, dans lequel les créneaux UL dans les cellules voisines fonctionnent en mode UL, et dans lequel les créneaux flexibles dans les cellules voisines fonctionnent soit en mode DL, soit en mode UL.

14. Procédé comprenant :
la réception (804) d'un noeud dans un système de communications sans fil, par un équipement utilisateur, UE, d'un déclenchement d'une transmission de liaison montante, UL, ;
la détermination (806) d'un type de créneau par l'UE ; **caractérisé par**
la détermination (808) de la nécessité d'une détection d'interférence basée sur la technique écouter avant de parler, LBT, UL, sur le type de créneau déterminé,
la réalisation (818, 826) d'une détection d'interférence basée sur LBT concernant les symboles, lorsque le type de créneau déterminé est un créneau flexible pour un ou plusieurs premiers symboles du créneau ;
la réalisation d'une transmission UL raccourcie par l'UE après une détection d'interférence basée sur LBT réussie pour un symbole et
la transmission (816) par l'UE sans réaliser de détection d'interférence basée sur LBT lorsque le type de créneau déterminé est un créneau UL.
